# EUROPÄISCHE PATENTSCHRIFT

(11) **EP 0 964 137 B1**
(45) Veröffentlichungstag und Bekanntmachung des Hinweises auf die Patenterteilung: **13.02.2002**
(21) Anmeldenummer: 99110540.4
(22) Anmeldetag: 01.06.1999
(51) Int. Cl.: F02D 9/10, F16K 1/22, F02D 11/10

(54) **Drosselklappenstutzen**
Throttle valve body
Corps de papillon

(30) Priorität: 09.06.1998 DE 19825727
(43) Veröffentlichungstag der Anmeldung: 15.12.1999
(73) Patentinhaber: Siemens Aktiengesellschaft, 80333 München (DE)
(72) Erfinder: Seeger, Armin, 65812 Bad Soden (DE)
(74) Vertreter: Klein, Thomas, Dipl.-Ing. (FH)

(56) Entgegenhaltungen:
- DE-A- 4 132 653
- DE-A- 4 209 586
- DE-A- 19 540 586
- DE-C- 4 122 801

## Beschreibung

Die Erfindung betrifft einen Drosselklappenstutzen mit einer in einem Drosselklappengehäuse gelagerten Drosselklappe gemäß den Merkmalen des Oberbegriffs des Patentanspruches 1.

Aus der DE 41 22 801 C1 ist ein Drosselklappenstutzen mit einem Gehäuse bekannt, wobei in dem Gehäuse eine die Drosselklappe tragende Drosselklappenwelle in einem gehäusefesten Lager gelagert ist. Die Drosselklappenwelle ist dabei über ein Getriebe antreibbar, daß auf einem fest mit dem Gehäuse verbundenen Magnetkörper angeordnet ist.

Aus der DE 195 10 622 A1 ist eine Drosselvorrichtung bekannt, die eine Drosselklappe aufweist, wobei die Drosselklappe an einer Drosselklappenwelle befestigt ist und die Drosselklappenwelle in einem Drosselklappengehäuse drehbar gelagert angeordnet ist. Die Drosselklappe kann von einer Stelleinrichtung verstellt werden, so daß ein Durchlaß durch einen Gaskanal für eine Strömung einer Luft, eines Kraftstoff-Luft-Gemisches oder dergleichen ausgebildet ist. Normalerweise kann die Drosselklappe um bis zu 90° geschwenkt werden, wobei aber auch Ausführungen bekannt sind, bei denen die Drosselklappe um weniger als 90° oder um mehr als 90° geschwenkt werden kann. Die Stelleinrichtung ist beispielsweise ein an der Drosselklappenwelle angreifender Bowdenzug, der über ein Gaspedal von einem Fahrer betätigt wird. Es ist aber auch bekannt, daß die Stelleinrichtung ein Stellmotor ist, der beispielsweise direkt oder über Übertragungselemente, wie zum Beispiel ein Zahnradgetriebe oder dergleichen, die Drosselklappenwelle verstellt. Es sind ebenfalls Ausführungen bekannt, bei denen, je nach Betriebsbedingungen die Drosselklappe sowohl elektrisch als auch mechanisch über einen Bowdenzug verstellt werden kann (sogenanntes "E-Gas"). Bekannt ist gleichsam eine Ausführung zur Verstellung der Drosselklappe nur mittels der Stelleinrichtung, die dann "drive by wire" genannt wird.

Die aus der DE 195 10 622 A1 bekannte Drosselvorrichtung stellt zwar eine Ausführungsform einer solchen Drosselvorrichtung dar, hat jedoch die folgenden Nachteile.

Das Drosselklappengehäuse besteht aus Druckguß und somit ist es erforderlich, nach der Herstellung des Drosselklappengehäuses dieses nachbearbeiten zu müssen. Dies ist insbesondere im Bereich der Lager der Drosselklappenwelle erforderlich, wobei in der DE 195 10 622 A1 Lager- und Spannmittel für die Drosselklappenwelle beschrieben sind, die die Drosselklappenwelle lagern und für eine Vorspannung in axialer Richtung sorgen. Eine Lageraussparung für die Aufnahme der Lager - und Spannmittel ist am Drosselklappengehäuse bei dem dargestellten Ausführungsbeispiel als abgestufte Bohrung ausgeführt. Dies bedingt eine entsprechende Nachbearbeitung des Drosselklappengehäuses. Genauso verhält es sich mit den Aussparungen, Bohrungen und dergleichen zur Aufnahme der übrigen Elemente der Drosselvorrichtung, wie beispielsweise der Stelleinrichtung und der Übertragungselemente.

Damit ist die Herstellung einer solchen Drosselvorrichtung kompliziert und aufwendig und darüber hinaus kostenintensiv, da bei der Ausgestaltung des Drosselklappengehäuses als Druckgußgehäuse eine mechanische Nachbearbeitung auf jeden Fall erforderlich ist, da dieses nicht mit der nötigen Präzision in einem vertretbaren Kostenrahmen hergestellt werden kann, so daß die Herstellung des Drosselklappengehäuses einschließlich der aufwendigen mechanischen Nachbearbeitung auch kostenintensiv ist.

Der Erfindung liegt die Aufgabe zugrunde, einen Drosselklappenstutzen bereitzustellen, bei dem eine mechanische Nachbearbeitung des Drosselklappengehäuses deutlich reduziert ist oder sogar entfallen kann.

Diese Aufgabe ist durch die Merkmale des Patentanspruches 1 gelöst.

Erfindungsgemäß ist vorgesehen, daß zumindest die Übertragungselemente auf und/oder an einem Elemententräger angeordnet sind, wobei der Elemententräger an dem Drosselklappengehäuse befestigt ist. Dabei kann eine Bearbeitung des Drosselklappengehäuses nach dessen Herstellung entfallen, da zumindest die Übertragungselemente auf dem Elemententräger angeordnet sind, der dann an dem Drosselklappengehäuse befestigt wird. Dabei versteht es sich von selbst, daß ein solcher Elemententräger, insbesondere ein flächig ausgestalteter Elemententräger, wesentlich einfacher herstellbar und bearbeitbar ist als das eigentliche, komplex geformte Drosselklappengehäuse.

Bei der Materialwahl, insbesondere für das Drosselklappengehäuse und den Elemententräger, sind vorzugsweise Materialien mit im wesentlichen gleichen Eigenschaften zu wählen, so daß zum Beispiel bei einem Drosselklappengehäuse aus Druckguß der Elemententräger ebenfalls aus einem Metall hergestellt ist. Besteht das Drosselklappengehäuse aus Kunststoff, ist in vorteilhafter Weise der Elemententräger ebenfalls aus Kunststoff hergestellt, wobei jedoch auch eine Materialpaarung Kunststoff/Metall oder umgekehrt nicht auszuschließen ist.

In Weiterbildung der Erfindung ist der Elemententräger ausrichtbar an dem Drosselklappengehäuse befestigt. Dies hat den Vorteil, daß nach einer Vormontage des Elemententrägers an dem Drosselklappengehäuse der Elemententräger ausgerichtet werden kann. Diese Ausrichtung ist dabei insbesondere unter dem Aspekt vorzunehmen, daß die Drosselklappe so in dem Drosselklappengehäuse ausgerichtet wird, daß sie den Durchlaß im Drosselklappengehäuse (Gaskanal oder Luftleitung) in ihrer Schließstellung weitestgehend abschließt. Dies ist daher von Bedeutung, da die Öffnungsstellung mittels der Stelleinrichtung variiert werden kann. Es kann darüber hinaus auch eine Ausrichtung des Elemententrägers dahin stattfinden, daß der Elemententräger mit den Übertragungselementen in Bezug auf den Stellantrieb ausgerichtet wird.

Eine Befestigung des Elemententrägers an dem Drosselklappengehäuse im Sinne einer Ausrichtung kann beispielsweise durch Verschweißen (bei Verwendung eines Druckguß-Drosselklappengehäuses und einem metallenem Elemententräger), durch Verkleben (bei Verwendung von Kunststoff für das Herstellen des Drosselklappengehäuses und des Elemententrägers) oder zum Beispiel auch durch Verschrauben des Elemententrägers an dem Drosselklappengehäuse erfolgen. Grundsätzlich sind zum Verkleben die Materialpaarungen Metall/Kunststoff für das Drosselklappengehäuse und den Elemententräger und umgekehrt möglich, wobei auch gleiche Materialien beziehungsweise Materialarten denkbar sind. Durch ein Verschrauben ist beispielsweise noch der Vorteil gegeben, daß mit Herstellung des Drosselklappengehäuses lediglich Bohrungen für Befestigungsschrauben vorgesehen werden müssen, wobei im Bereich der Bohrungen der Elemententräger Löcher mit größerem Durchmesser oder auch Langlöcher aufweist. Die Befestigung des Elemententrägers mittels Schrauben erfolgt schnell, einfach und ausrichtbar, wobei die Bohrungen in dem Drosselklappengehäuse vorher mit einem Gewinde versehen worden sind oder selbstschneidende Schrauben verwendet werden. Umgekehrt ist es denkbar, bei der Herstellung des Drosselklappengehäuses Zapfen, Vorsprünge oder dergleichen vorzusehen, die durch Bohrungen, Ausnehmungen oder dergleichen in dem Elemententräger geführt werden und anschließend plastisch verformt werden, um den Elemententräger an dem Drosselklappengehäuse unlösbar festzusetzen.

In Weiterbildung der Erfindung ist auch der Stellantrieb, insbesondere ein Elektromotor, an dem Elemententräger befestigt. Dies hat den Vorteil, daß in dem Drosselklappengehäuse lediglich eine Aussparung für den Stellantrieb vorgesehen werden muß, deren Herstellung keiner hohen Präzision bedarf, da die Ausrichtung des Stellantriebes in Bezug auf die Übertragungselemente im Rahmen der Montage der Elemente auf dem Elemententräger erfolgt. Außerdem ist durch die Anordnung der Übertragungselemente und des Stellantriebes schon eine Vormontage gegeben, so daß sich der Zusammenbau des Drosselklappenstutzens beschleunigt.

In Weiterbildung der Erfindung ist an dem Elemententräger wenigstens ein Drosselklappenwellenlager für eine die Drosselklappe tragende Drosselklappenwelle vorgesehen. Auch hier ist es wieder von Vorteil, daß das Drosselklappenwellenlager aufgrund der Anordnung an dem Elemententräger so in Bezug auf das Drosselklappengehäuse ausgerichtet werden kann, daß nach der Ausrichtung in der Schließstellung der Drosselklappe eine weitestgehende oder auch vollständige Schließung des Gaskanales beziehungsweise der Luftleitung erreicht wird. Wie auch immer geartete Maßnahmen zur Aufnahme des Drosselklappenwellenlagers in dem Drosselklappengehäuse können entfallen.

In Weiterbildung der Erfindung ist das Drosselklappenwellenlager in einer Hülse des Elemententrägers angeordnet. Damit ist eine einfache konstruktive Ausgestaltung zur Aufnahme des Drosselklappenwellenlagers an dem Elemententräger gegeben, wobei die Hülse mit dem Elemententräger ein Teil bildet, wobei es auch denkbar ist, die Hülse nachträglich an dem Elemententräger zu befestigen. Dies kann beispielsweise durch Einpressen, Verschweißen oder dergleichen der Hülse mit dem Elemententräger erfolgen.

In Weiterbildung der Erfindung ist konzentrisch um die Hülse zumindest eine, insbesondere auf ein Übertragungselement wirkende, Rückstellfeder angeordnet, die die Drosselklappe in wenigstens eine Richtung vorspannt. Damit kann schon bei der Vormontage des Elemententrägers zumindest eine Rückstellfeder mit vormontiert werden, die die Drosselklappe im Sinne einer Bewegungsrichtung in Schließrichtung vorspannt. Somit wird in an sich bekannter Weise die Drosselklappe durch Betätigung des Stellantriebes oder auch durch die Betätigung eines Gaspedales oder Handgashebels, das/der über Verbindungselemente wie einem Bowdenzug mit der Drosselklappe verbunden ist, in Öffnungsrichtung bewegt und auch von diesem unter Zuhilfenahme der Kraft der Rückstellfeder - oder bei Ausfall des Stellantriebes nur mit Hilfe der Kraft der Rückstellfeder - in Schließrichtung bewegt. Denkbar ist auch die Anordnung von zwei Federn konzentrisch um die Hülse, wobei die eine Feder die Aufgabe der schon beschriebenen Rückstellfeder übernimmt und die zweite Feder die Aufgabe hat, in Richtung einer Öffnungsstellung der Drosselklappe zu wirken, um somit Notlaufeigenschaften für die Brennkraftmaschine, bei der der Drosselklappenstutzen eingesetzt ist, zu erzielen. Dies geschieht derart, daß bei Ausfall des Stellantriebes oder dessen Steuereinrichtung durch die beiden dann gegeneinander wirkenden Federn eine Notlaufstellung der Drosselklappe eingestellt wird, die ein Absterben der Brennkraftmaschine, deren Leistung mittels der Stellung der Drosselklappe eingestellt wird, wirksam vermieden wird, wobei diese Notlaufstellung in vorteilhafter Weise so gewählt ist, daß die Brennkraftmaschine auch nicht beim Aufschalten zusätzlicher Belastungen wie beispielsweise elektrischer Verbraucher oder dergleichen, die eigentlich einen Drehzahlabfall bedingen, nicht abstirbt. Im Regelbetriebsfall arbeitet dann der Stellantrieb in Öffnungsrichtung gegen die Rückstellfeder und in Schließrichtung gegen die zweite Feder, um die Drosselklappe in ihre vollkommene Schließstellung zu bringen. Denkbar ist es, die beiden beschriebenen Federn als ein einziges Bauteil auszugestalten.

In Weiterbildung der Erfindung ist zwischen der Hülse und der Drosselklappenwelle eine Dichtung vorgesehen. Damit ist die Abdichtung des Gaskanales beziehungsweise der Luftleitung, in dem beziehungsweise in der die Drosselklappe angeordnet ist, gegenüber der äußeren Umwelt sichergestellt, da in dem Kanal beziehungsweise in der Leitung Unterdruck herrscht.

In Weiterbildung der Erfindung trägt der Elemententräger zumindest einen Teil einer Positionserfassungseinrichtung zur Erfassung der Position der Drosselklappe. Ist eine solche Positionserfassungseinrichtung in an sich bekannter Weise als Drosselklappenpotentiometer ausgeführt, sind zum Beispiel - bei einer Ausgestaltung des Elemententrägers aus Kunststoff - zumindest die Widerstandsbahnen, gegebenenfalls Kontaktbahnen - auf dem Elemententräger aufgebracht, wobei ein zugehöriger Schleifer mit der Drosselklappenwelle oder auch einem Übertragungselement verbunden ist. Ist der Elemententräger aus einem Metall, wird beispielsweise ein elektrisch isolierender Träger, wie zum Beispiel eine Leiterplatte, auf dem Elemententräger befestigt (zum Beispiel verklebt), wobei die Leiterplatte dann die Widerstandsbahnen und gegebenenfalls die Kontaktbahnen trägt. Handelt es sich bei der Positionserfassungseinrichtung um eine berührungslos wirkende Positionserfassungseinrichtung (zum Beispiel ein Hall-Sensor), kann der bewegte Magnet zum Beispiel an der Drosselklappenwelle, an einer Welle eines Übertragungselementes oder auch an einer Welle des Stellantriebes (insbesondere des Elektromotors) befestigt sein, wobei die zugehörigen Hallelemente dann an dem Elemententräger selber befestigt sind.

Die Herstellung des Elemententrägers aus Kunststoff hat darüber hinaus noch den Vorteil, daß auf oder in dem Elemententräger Leiterbahnen vorgesehen werden können, um zum Beispiel die Stromversorgung für den Stellantrieb ausgehend von einem Stecker und die Abgabe der Signale der Positionserfassungseinrichtung zu dem Stecker auszuführen. Auch damit erhöht sich wieder die einfache Montierbarkeit, wobei darüber hinaus auch noch eine Vereinfachung der Verkabelung und eine Erhöhung der Funktionssicherheit gegeben sind, da Kabel, die in an sich bekannter Weise verlötet werden müßten, keine Fehlerquelle mehr darstellen und auch der nachteilige Lötvorgang entfällt.

In Weiterbildung der Erfindung ist nach der Befestigung des Elemententrägers an dem Drosselklappengehäuse eine elastische Dichtung im Bereich einer Öffnung, insbesondere für einen Stecker, des Drosselklappengehäuses zusammendrückbar. Damit wird sichergestellt, daß automatisch nach der Befestigung des Elemententrägers an dem Drosselklappengehäuse der Bereich, in dem die Übertragungselemente angeordnet sind, gegenüber äußeren Einflüssen wie Verschmutzung abgedichtet und geschützt ist. Auch wird hierdurch eine hohe Montagefreundlichkeit gegeben, da die Dichtung automatisch mit der Befestigung des Elemententrägers an dem Drosselklappengehäuse zusammengedrückt wird.

In Weiterbildung der Erfindung weist das Drosselklappengehäuse zur Abdeckung wenigstens der Übertragungselemente einen Drosselklappengehäusedeckel auf, wobei der Drosselklappengehäusedeckel Mittel zur Festsetzung des Elemententrägers an dem Drosselklappengehäuse aufweist. Bei dem bisher Beschriebenen war es so, daß der Elemententräger an dem Drosselklappengehäuse befestigt wurde und die Übertragungselemente damit frei zugänglich bleiben. An dieser Stelle ist es nichts Neues, zumindest die Übertragungselemente mittels eines Gehäusedeckels vor Umwelteinflüssen zu schützen.

Erfindungsgemäß ist hier nun vorgesehen, daß gleichzeitig mit Aufsetzen des Drosselklappengehäusedeckels nicht nur ein Schutz vor äußeren Umwelteinflüssen gegeben ist, sondern auch ein Montageschritt im Sinne der Festsetzung des Elemententrägers an dem Drosselklappengehäuse erfolgt. Dies kann beispielsweise dadurch erfolgen, daß der Drosselklappengehäusedeckel über Rast-/Nutverbindungen mit dem Drosselklappengehäuse verrastet wird und gleichzeitig Stifte, die an dem Drosselklappengehäusedeckel angeordnet sind, durch den Elemententräger in Bohrungen des Drosselklappengehäuses eingeführt werden, um den Elemententräger an dem Drosselklappengehäuse festzusetzen, wobei zusätzlich noch Distanzelemente in einem solchen Sinne an dem Gehäusedeckel angeordnet und ausgestaltet sind, daß dadurch der Elemententräger eine Kraftbeaufschlagung in Richtung des Drosseklappengehäuses erfährt.

Der die Übertragungselemente tragende Elemententräger kann derart gestaltet sein, daß er nur die Übertragungselemente oder auch zusätzlich den Stellantrieb und/oder die Positionserfassungseinrichtung und/oder das Drosselklappenwellenlager und/oder die Feder(n) trägt. Dabei kann der Elemententräger zur Aufnahme der genannten Elemente einstückig ausgebildet sein oder, je nachdem welche Elemente der Drosselklappenstutzen aufweist oder nicht (Modulbauweise), um die entsprechenden Elemente einschließlich ihres zugehörigen, eigenen Elemententrägers ergänzt werden.

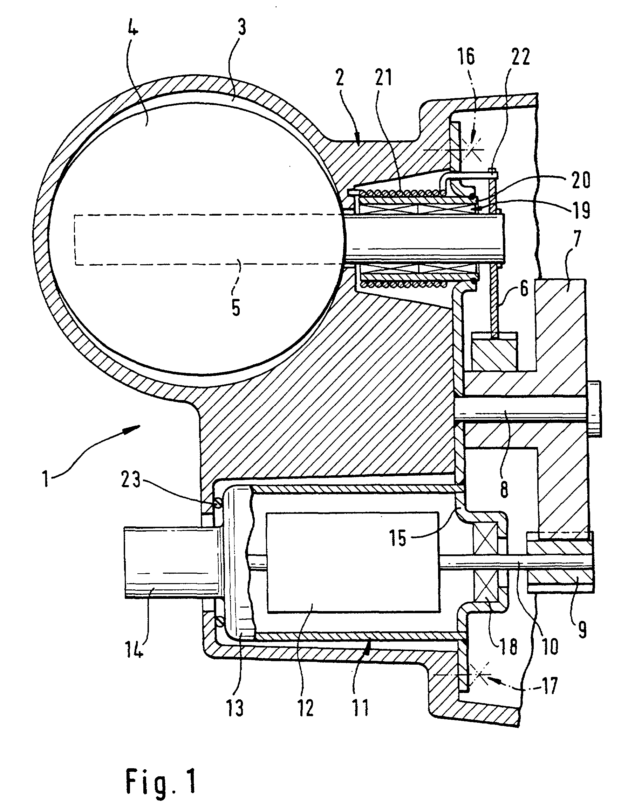

Im folgenden ist der erfindungsgemäße Drosselklappenstutzen an einem bevorzugten Ausführungsbeispiel beschrieben und anhand der Figur 1 erläutert.

Figur 1 zeigt einen Drosselklappenstutzen 1, der der Leistungseinstellung einer Brennkraftmaschine dient und in der Regel zwischen dem Ausgang eines Luftfilters, über den Luft angesaugt wird, und dem Einlaßsystem der Brennkraftmaschine angeordnet ist.

Der Drosselklappenstutzen 1 weist ein Drosselklappengehäuse 2 auf, wobei das Drosselklappengehäuse 2 eine Luftleitung 3 (wenn Luft durch diese Luftleitung 3 geführt wird; ansonsten handelt es sich bei dieser Luftleitung um einen Gaskanal, durch den ein Kraftstoff-Luft-Gemisch geführt wird) aufweist. In der Luftleitung 3 ist eine Drosselklappe 4 auf einer Drosselklappenwelle 5 gelagert, wobei in der Figur 1 die Drosselklappe 4 in einer leicht geöffneten Stellung gezeigt ist. Die Drosselklappe 4 weist eine solche Form auf, die es ermöglicht, die Luftleitung 3 in der Schließstellung der Drosselklappe 4 vollkommen oder nahezu vollkommen zu verschließen.

Auf dem der Drosselklappe 4 abgewandten Ende der Drosselklappenwelle 5 befindet sich ein Zahnrad, insbesondere ein Zahnradsegment 6, das wiederum mit einem kleineren Zahnrad eines Abtriebszahnrades 7 kämmt. Weiterhin weist das Abtriebszahnrad 7, das auf einer Abtriebswelle 8 angeordnet ist, ein größeres Zahnrad auf, welches mit einem Antriebszahnrad 9 kämmt. Dieses Antriebszahnrad 9 ist drehfest auf der Motorwelle 10 eines Elektromotors 11 angeordnet. Der Elektromotor 11 weist in an sich bekannter Weise um die Motorwelle 10 herum einen Rotor 12 auf, wobei der Rotor 12 in einem glockenartig ausgestalteten Elektromotorgehäuse 13 angeordnet ist, einschließlich einem nicht gezeigten Stator. Weitere erforderliche Elemente des Elektromotors sind aus Gründen der vereinfachten Darstellung nicht wiedergegegeben. Die Ansteuerung des Elektromotors 11 erfolgt beispielsweise über einem an dem Elektromotorgehäuse 13 angeordneten Stecker 14.

An dem Drosselklappengehäuse 2 ist nun erfindungsgemäß ein Elemententräger 15 angeordnet, der zunächst als Übertragungselemente das Untersetzungsgetriebe, gebildet aus dem Zahnradsegment 6, dem Abtriebszahnrad 7, und der Abtriebswelle 8, aufnimmt. Der Elemententräger 15 kann über Befestigungspunkte 16 und 17 an dem Drosselklappengehäuse 2 erfolgen. Alternativ oder ergänzend dazu ist es auch möglich, den Elemententräger 15 flächig oder punktuell mit dem Drosselklappengehäuse 2 zu verkleben.

Wie in der Figur 1 zu sehen ist, ist der Elemententräger 15 im Bereich des Elektromotors 11 zur Aufnahme eines Motorwellenlagers 18 ausgebildet. Weiterhin ist es vorgesehen, daß, nachdem das Motorwellenlager 18 an dem Elemententräger 15 befestigt worden ist, der Rotor 12 mit der Motorwelle 10 durch das Motorwellenlager 18 durchgeführt wird und dann das glockenartige Elektromotorgehäuse 13 mit dem nicht gezeigten Stator über den Rotor 12 geführt wird, wobei dann das Elektromotorgehäuse 13 mit dem Elemententräger 15 fest verbunden wird. Anschließend kann eine Anbringung des Antriebszahnrades 9 auf der Motorwelle 10 erfolgen. Somit bildet der Elemententräger 15 mit dem Untersetzungsgetriebe 6 bis 8 und dem Elektromotor 11 einschließlich seiner Komponenten 12 bis 14 eine vormontiertbare Baueinheit. Alternativ kann der Elektromotor 11 eine eigenständige Baueinheit bilden, die an dem Elemententräger 15 zum Beispiel durch Verschrauben angebracht wird. An die Ausnehmungen für den Elektromotor 11 in dem Drosselklappengehäuse 2 sind keine hohen präzisen Anforderungen zu stellen. Sie sind lediglich so auszugestalten, daß eine Bewegung des Elektromotorgehäuses 13 innerhalb dieser Ausnehmung in gewissen Grenzen möglich ist.

Zur Vervollständigung dieser Baueinheit ist auch ein Drosselklappenwellenlager 20 an dem Elemententräger 15 anzuordnen, wobei dies bei dem gezeigten Ausführungsbeispiel derart erfolgt ist, daß das Drosselklappenwellenlager 19 von einer Hülse 20 aufgenommen wird, wobei die Hülse 20 an dem Elemententräger 15 befestigt ist. In der Figur 1 ist gezeigt, daß der Elemententräger 15 eine nicht näher bezeichnete Bohrung zur Aufnahme der Hülse 20 aufweist und die Hülse 20 mit dem Elemententräger 15 zum Beispiel durch Verschweißen verbunden wird. Es ist aber auch denkbar, daß der Elemententräger 15 und die Hülse 20 einstückig ausgeführt sind (eine Baueinheit bildend).

Wie in der Figur 1 zu erkennen ist, ist die Drosselklappenwelle 5 nur auf der einen Seite in dem Drosselklappenwellenlager 19 gelagert, so daß eine Lagerung der Drosselklappenwelle 5 auf der anderen Seite in dem Drosseiklappengehäuse 2 entfallen kann. Um hier eine ausreichend stabile Lagerung zu erzielen, ist ein entsprechend langes Drosselklappenwellenlager 19 vorzusehen oder es sind - wie in Figur 1 gezeigt - zwei hintereinander (oder leicht auf Distanz) angeordnete Drosselklappenwellenlager 19 vorgesehen. Durch die Hintereinanderschaltung von wenigstens zwei Drosselklappenwellenlagern 19 und einer entsprechend lang ausgestalteten Hülse 20 wird die erforderliche Führung für die Drosselklappenwelle 5 erzielt. Denkbar ist es, zur Verbesserung der Lagerung im Bereich um die Hülse 20 herum eine Verstärkung des Elemententrägers 15 zur Aufnahme der anfallenden Kräfte vorzusehen.

Um die Hülse 20 herum ist eine Rückstellfeder 21 vorgesehen, deren einer Federarm 22 auf das Zahnradsegment 6 wirkt und der andere Federarm der Rückstellfeder 21 sich an der Hülse 20 oder auch an dem Drosselklappengehäuse 2 abstützt.

Während in der Figur 1 als Übertragungselemente das Untersetzungsgetriebe 6 bis 8, als Stellantrieb der Elektromotor 11 mit seinen zugehörigen Elementen 12 bis 14 sowie zur Lagerung der Drosselklappenwelle 5 die Elemente 19, 20 gezeigt sind, können auch weitere Elemente wie zum Beispiel eine Positionserfassungseinrichtung an und/oder in dem Elemententräger 15 vorgesehen werden. Darüber hinaus ist es denkbar, daß der Elemententräger 15, nicht wie in Figur 1 gezeigt ist, einstückig ausgestaltet ist, sondern aus mehreren Teilen besteht, die dann entsprechende Elemente aufnehmen. Von besonderem Vorteil ist jedoch der einstückig ausgestaltete Elemententräger 15 und die Anordnung der für den Antrieb der Drosselklappenwelle 5 erforderlichen Elemente auf dem Elemententräger 15, so daß dieser einschließlich der Drosselklappenwelle 5 und der Drosselklappe 4 vormontiert werden kann und in das Drosselklappengehäuse 2 eingesetzt wird. Zu diesem Zweck ist das Drosselklappengehäuse 2 so ausgestaltet, daß dieser Montagevorgang möglich wird. Dies kann zum Beispiel durch die in der Figur 1 gezeigte Trennung (Trennebene ist die Blattebene der Figur 1) zweier Drosselklappengehäusehälften erfolgen, wobei der Elemententräger 15 auch dazu dient, nach dem Einsetzen die beiden Drosselklappengehäusehälften miteinander zu verbinden. Darüber hinaus können zur Verbindung der beiden Drosselklappengehäusehälften auch noch weitere Verbindungsmittel vorgesehen werden.

Abschließend sei noch erwähnt, daß um den Stecker 14 herum eine elastische Dichtung 23 angeordnet ist, die nach dem Einsetzen des Elemententrägers 15 und Befestigung desselben an dem Drosselklappengehäuse 2 zwischen einer Wand des Drosselklappengehäuses 2 und dem Elektromotorgehäuse 13 im Sinne einer Abdichtung zusammengedrückt wird. Ebenso können die in Figur 1 gezeigten Funktionselemente des Drosselklappenstutzens 1 von einem Gehäusedeckel abgedeckt werden, wobei schon beschrieben wurde, daß der Gehäusedeckel auch zur Festsetzung des Elemententrägers 15 an dem Drosselklappengehäuse 2 verwendet werden kann.

### Bezugszeichenliste:

- 1.: Drosselklappenstutzen
- 2.: Drosselklappengehäuse
- 3.: Luftleitung
- 4.: Drosselklappe
- 5.: Drosselklappenwelle
- 6.: Zahnradsegment
- 7.: Abtriebszahnrad
- 8.: Abtriebswelle
- 9.: Antriebszahnrad
- 10.: Motorwelle
- 11.: Elektromotor
- 12.: Rotor
- 13.: Elektromotorgehäuse
- 14.: Stecker
- 15.: Elemententräger
- 16.: Befestigungspunkt
- 17.: Befestigungspunkt
- 18.: Motorwellenlager
- 19.: Drosselklappenwellenlager
- 20.: Hülse
- 21.: Rückstellfeder
- 22.: Federarm
- 23.: Dichtung

## Patentansprüche

1. Drosselklappenstutzen (1) mit einer in einem Drosselklappengehäuse (2) drehbar gelagerten und von einem Stellantrieb über Übertragungselemente verstellbaren Drosselklappe (4), wobei zumindest die Übertragungselemente auf oder an einem Elemententräger (15) angeordnet sind, wobei der Elemententräger (15) lösbar oder unlösbar an dem Drosselklappengehäuse (2) befestigt ist, **dadurch gekennzeichnet, daß** an dem Elemententräger (15) wenigstens ein Drosselklappenwellenlager (19) für eine die Drosselklappe (4) tragende Drosselklappenwelle (5) vorgesehen ist.

2. Drosselklappenstutzen (1) nach Anspruch 1, **dadurch gekennzeichnet, daß** der Elemententräger (15) ausrichtbar an dem Drosselklappengehäuse (2) befestigt ist.

3. Drosselklappenstutzen (1) nach Anspruch 1 oder 2, **dadurch gekennzeichnet, daß** der Stellantrieb, insbesondere ein Elektromotor (11) an dem Elemententräger (15) befestigt ist.

4. Drosselklappenstutzen (1) nach einem der Ansprüche 1 bis 3, **dadurch gekennzeichnet, daß** das Drosselklappenwellenlager (19) in einer Hülse (20) des Elemententrägers (15) angeordnet ist.

5. Drosselklappenstutzen (1) nach Anspruch 4, **dadurch gekennzeichnet, daß** konzentrisch um die Hülse (20) zumindest eine, insbesondere auf ein Übertragungselement wirkende, Rückstellfeder (21) angeordnet ist, die die Drosselklappe (4) in wenigstens eine Richtung vorspannt.

6. Drosselklappenstutzen (1) nach Anspruch 4 oder 5, **dadurch gekennzeichnet, daß** zwischen der Hülse (20) und der Drosselklappenwelle (5) eine Dichtung vorgesehen ist.

7. Drosselklappenstutzen (1) nach einem der vorhergehenden Ansprüche, **dadurch gekennzeichnet, daß** der Elemententräger (15) zumindest einen Teil einer Positionserfassungseinrichtung zur Erfassung der Position der Drosselklappe (4) trägt.

8. Drosselklappenstutzen (1) nach einem der vorhergehenden Ansprüche, **dadurch gekennzeichnet, daß** nach der Befestigung des Elemententrägers (15) an dem Drosselklappengehäuse (2) eine elastische Dichtung (23) im Bereich einer Öffnung, insbesondere für einen Stecker (14) des Drosselklappengehäuses (2) zusammendrückbar ist.

9. Drosselklappenstutzen (1) nach einem der vorhergehenden Ansprüche, **dadurch gekennzeichnet, daß** das Drosselklappengehäuse (2) zur Abdeckung wenigstens der Übertragungselemente einen Drosselklappengehäusedeckel aufweist, wobei der Drosselklappengehäusedeckel Mittel zur Festsetzung des Elemententrägers (15) an dem Drosselklappengehäuse (2) aufweist.

## Claims

1. Throttle valve connector (1) having a throttle valve (4) which is rotatably mounted in a throttle valve housing (2) and can be adjusted by an actuator drive by means of transmission elements, at least the transmission elements being arranged on an element carrier (15), the element carrier (15) being detachably or non-detachably fastened to the throttle valve housing (2), **characterized in that** at least one throttle valve shaft bearing (19) is provided on the element carrier (15), for a throttle valve shaft (5) bearing the throttle valve (4).

2. Throttle valve connector (1) according to Claim 1, **characterized in that** the element carrier (15) is fastened to the throttle valve housing (2) in an alignable fashion.

3. Throttle valve connector (1) according to Claim 1 or 2, **characterized in that** the actuator drive, in particular an electromotor (11), is fastened to the element carrier (15).

4. Throttle valve connector (1) according to one of Claims 1 to 3, **characterized in that** the throttle valve shaft bearing (19) is arranged in a sleeve (20) of the element carrier (15).

5. Throttle valve connector (1) according to Claim 4, **characterized in that** at least one restoring spring (21) which acts in particular on a transmission element and which biases the throttle valve (4) in at least one direction is arranged concentrically around the sleeve (20).

6. Throttle valve connector (1) according to Claim 4 or 5, **characterized in that** a seal is provided between the sleeve (20) and the throttle valve shaft (5).

7. Throttle valve connector (1) according to one of the preceding claims, **characterized in that** the element carrier (15) bears at least part of a position-sensing device for sensing the position of the throttle valve (4).

8. Throttle valve connector (1) according to one of the preceding claims, **characterized in that**, after the element carrier (15) has been fastened to the throttle valve housing (2), an elastic seal (23) in the region of an opening, in particular for a plug (14) of the throttle valve housing (2) can be compressed.

9. Throttle valve connector (1) according to one of the preceding claims, **characterized in that** the throttle valve housing (2) has a throttle valve housing lid for covering at least the transmission elements, the throttle valve housing lid having means for securing the element carrier (15) to the throttle valve housing (2).

## Revendications

1. Corps de papillon (1) avec un papillon rotatif (4) supporté dans une enceinte de papillon (2) et réglable par un organe correcteur par l'intermédiaire d'éléments de transmission, dans lequel au moins les éléments de transmission sont attachés sur ou à un porte-éléments (15), dans lequel le porte-éléments (15) est fixé de façon démontable ou indémontable à l'enceinte de papillon (2), **caractérisé en ce qu'**il est prévu sur le porte-éléments (15) au moins un palier d'arbre de papillon (19) pour l'arbre de papillon (5) portant le papillon (4).

2. Corps de papillon (1) suivant la revendication 1, **caractérisé en ce que** le porte-éléments (15) est fixé en pouvant être aligné à l'enceinte de papillon (2).

3. Corps de papillon (1) suivant la revendication 1 ou 2, **caractérisé en ce que** l'organe correcteur, en particulier un moteur électrique (11), est fixé au porte-éléments (15).

4. Corps de papillon (1) suivant l'une quelconque des revendications 1 à 3, **caractérisé en ce que** le palier d'arbre de papillon (19) est disposé dans une douille (20) du porte-éléments (15).

5. Corps de papillon (1) suivant la revendication 4, **caractérisé en ce qu'**au moins un ressort de rappel (21), agissant en particulier sur un élément de transmission, est disposé de façon concentrique autour de la douille (20), ressort qui exerce une précontrainte sur le papillon (4) dans au moins une direction.

6. Corps de papillon (1) suivant la revendication 4 ou 5, **caractérisé en ce qu'**il est prévu un joint d'étanchéité entre la douille (20) et l'arbre de papillon (5).

7. Corps de papillon (1) suivant l'une quelconque des revendications précédentes, **caractérisé en ce que** le porte-éléments (15) porte au moins une partie d'un dispositif détecteur de position pour détecter la position du papillon (4).

8. Corps de papillon (1) suivant l'une quelconque des revendications précédentes, **caractérisé en ce qu'**après la fixation du porte-éléments (15) à l'enceinte de papillon (2), un joint d'étanchéité élastique (23) peut être comprimé dans la région d'une ouverture, en particulier pour une fiche (14) de l'enceinte de papillon (2).

9. Corps de papillon (1) suivant l'une quelconque des revendications précédentes, **caractérisé en ce que** l'enceinte de papillon (2) présente un couvercle de l'enceinte de papillon pour couvrir au moins les éléments de transmission, le couvercle de l'enceinte de papillon présentant des moyens pour attacher le porte-éléments (15) à l'enceinte de papillon
